# EUROPÄISCHE PATENTANMELDUNG

(11) **EP 0 903 254 A2**
(43) Veröffentlichungstag der Anmeldung: **24.03.1999**
(21) Anmeldenummer: 98116610.1
(22) Anmeldetag: 02.09.1998
(51) Int. Cl.: B60K 15/067, B60K 15/063

(54) **Kraftstoffversorgungsanlage für ein Kraftfahrzeug**

(30) Priorität: 19.09.1997 DE 19741314
(71) Anmelder: Bayerische Motoren Werke Aktiengesellschaft, 80788 München (DE)
(72) Erfinder: Fottner, Helmut, 82024 Taufkirchen (DE); Lischo, Bernd, 84405 Dorfen (DE); Berger, Sabine, 85764 Oberschleissheim (DE)

(57) **Zusammenfassung**

Es ist bereits bekannt, eine Kraftstoffversorgungsanlage für ein Kraftfahrzeug mit einem Kraftstoffbehälter zu versehen, der an der Unterseite eines Bodenbleches des Kraftfahrzeuges befestigt ist. Aufgrund der Bauraumverhältnisse ist das Fassungsvermögen eines solchen Kraftstoffbehälters in der Regel relativ klein. Aufgabe der Erfindung ist es, eine Kraftstoffversorgungsanlage für ein Kraftfahrzeug zu schaffen, bei der eine größere Menge an Kraftstoff im Kraftfahrzeug mitgeführt werden kann.

Dies wird dadurch erreicht, daß ein Kraftstoff-Zusatzbehälter (9, 38) innerhalb des Fahrzeuginnenraumes (6) an dem Bodenblech (2) befestigt und mit dem Kraftstoffbehälter verbunden ist.

## Beschreibung

Die Erfindung betrifft eine Kraftstoffversorgungsanlage für ein Kraftfahrzeug gemäß dem Oberbegriff des Anspruchs 1.

Es ist bereits bekannt, einen Kraftstoffbehälter außerhalb des Fahrzeuginnenraumes am Bodenblech des Kraftfahrzeuges zu befestigen. Aufgrund der vorgegebenen Bauraumverhältnisse ist das Fassungsvermögen eines solchen Kraftstoffbehälters in der Regel auf 50 bis 80 Liter Kraftstoff beschränkt.

Aufgabe der Erfindung ist es, eine Kraftstoffversorgungsanlage für ein Kraftfahrzeug zu schaffen, mit der eine größere Menge an Kraftstoff als bei den bekannten Kraftstoffversorgungsanlagen mitgeführt werden kann.

Diese Aufgabe wird erfindungsgemäß durch die Merkmale des Anspruchs 1 gelöst.

Durch die Schaffung eines zusätzlichen Bauraumes oberhalb des Bodenbleches ist es möglich, einen Kraftstoff-Zusatzbehälter im Kraftfahrzeug unterzubringen.

Der zusätzliche Bauraum wird in einfacher Weise durch eine wannenförmige Abdeckung geschaffen, die durch eine entsprechende Dichtungsanordnung flüssigkeitsdicht an einer Oberseite des Bodenblechs befestigt ist. Vorzugsweise befindet sich der durch die Abdeckung geschützte Kraftstoff-Zusatzbehälter am in Kraftfahrzeug-Längsrichtung gesehenen hinteren, oberen Ende der Sitzwanne für die Rücksitzbank und dem dazu angrenzenden Kofferraum.

Zur Erhöhung der Stabilität kann die Abdeckung mit Rippen oder Stegen und/oder mit Sicken versehen sein.

Der unterhalb der Abdeckung angeordnete Kraftstoff-Zusatzbehälter weist einen flachen, rechteckförmigen Querschnitt auf, so daß im Kofferraum noch genügend Raum zum Beladen vorhanden ist. An der Oberseite des Kraftstoff-Zusatzbehälters sind raumsparend die erforderlichen Leitungen und Anschlüsse angeordnet. Als Schutzmaßnahme ist der Kraftstoff-Zusatzbehälter einschließlich der Anschlüsse und der erforderlichen Leitungen vorteilhafterweise in eine gasdichte Diffusions-Sperrfolie eingeschweißt.

In einer vorteilhaften Ausführungsform erfolgt die Befestigung des Kraftstoff-Zusatzbehälters durch mindestens zwei, vorzugsweise an gegenüberliegenden Seiten des Kraftstoff-Zusatzbehälters angeordnete, federbelastete Haltebolzen, durch die bei einer Verformung des Bodenblechs, beispielsweise durch einen Crash, ein zerstörungsfreies Anheben des Zusatzbehälters vom Bodenblech möglich ist. Unterhalb des Kraftstoff-Zusatzbehälters ist in einer vorteilhaften Ausführungsform ebenfalls als Schutz eine Ablaufwanne angeordnet, die wie der Kraftstoff-Zusatzbehälter bei einem Crash entlang der Haltebolzen in einfacher Weise zerstörungsfrei verschiebbar ist.

In einer vorteilhaften Ausführungsform ist der Kraftstoff-Zusatzbehälter und die darunter befindliche Ablaufwanne durch mindestens zwei Halteriemen an der Karosserie befestigt. Durch die Verwendung von Halteriemen ergibt sich eine einfache Montage. So können die Halteriemen bereits mit ihrem einen Ende an der Karosserie befestigt sein und nach dem Einlegen der Ablaufwanne und des Zusatzbehälters an dem dafür vorgesehenen Platz erfolgt die Befestigung des anderen Endes des jeweiligen Riemens an der dafür vorgesehenen Stelle der Karosserie. Eine einfache Montage ergibt sich durch die Verwendung von ineinander steckbaren Ösen und Haken, die jeweils an den Enden der Riemen bzw. an der Karosserie angeordnet sind. Durch die Elastizität der Riemen ist eine Vorspannkraft auf den Zusatzbehälter aufbringbar. Zusätzlich kann die Elastizität der Riemen so ausgelegt sein, daß bei einer Verformung des Bodenblechs unterhalb des Zusatzbehälters der jeweilige Riemen um einen vorbestimmten Verschiebeweg nachgibt. Der Verschiebeweg der Ablaufwanne und des Kraftstoff-Zusatzbehälters liegt bei beiden Befestigungsformen zwischen 20 und 60 mm. Von Vorteil ist ferner die Verwendung eines, beispielsweise lose eingelegten Abdichtungselementes an den Stellen zwischen der Abdeckung und der Karosserie, an denen die Karosserie einen besonders komplizierten Verlauf aufweist. Durch das Abdichtungselement kann somit ein Spalt von mehreren Zentimetern in einfacher Weise überbrückt werden.

Ausführungsformen der Erfindung werden nachstehend anhand der Zeichnungen beispielshalber beschrieben. Dabei zeigen:
- Fig. 1: einen teilweise dargestellten Bereich eines Kraftfahrzeuges im Längsschnitt zwischen einer Sitzwanne für eine Rücksitzbank und einem Kofferraum, wobei in diesem Bereich eine erste Ausführungsform eines Kraftstoff-Zusatzbehälter angeordnet ist,
- Fig. 2: eine perspektivische Ansicht von oben einer in der Fig. 1 gezeigten Abdeckung,
- Fig. 3: eine perspektivische Ansicht von oben des in der Fig. 1 gezeigten Kraftstoff-Zusatzbehälters,
- Fig. 4: eine perspektivische Ansicht von oben einer in der Fig. 1 dargestellten Ablaufwanne,
- Fig. 5: einen teilweise dargestellten Bereich eines Kraftfahrzeuges in einer Querschnittsansicht in Längsrichtung des Kraftfahrzeuges, wobei zwischen einer linken und rechten seitlichen Begrenzungswand des Kraftfahrzeuges eine zweite Ausführungsform eines Kraftstoff-Zusatzbehälters angeordnet ist,
- Fig. 6: eine perspektivische Ansicht von oben der in der Fig. 5 dargestellten Abdeckung,
- Fig. 7a: eine perspektivische Ansicht von oben des in der Fig. 5 gezeigten Kraftstoff-Zusatzbehälters, in der der Verlauf von zwei Halteriemen in strichpunktierten Linien eingezeichnet ist,
- Fig. 7b: eine perspektivische Ansicht von oben eines Halteriemens und
- Fig. 8: eine perspektivische Ansicht einer in der Fig. 5 gezeigten Ablaufwanne.

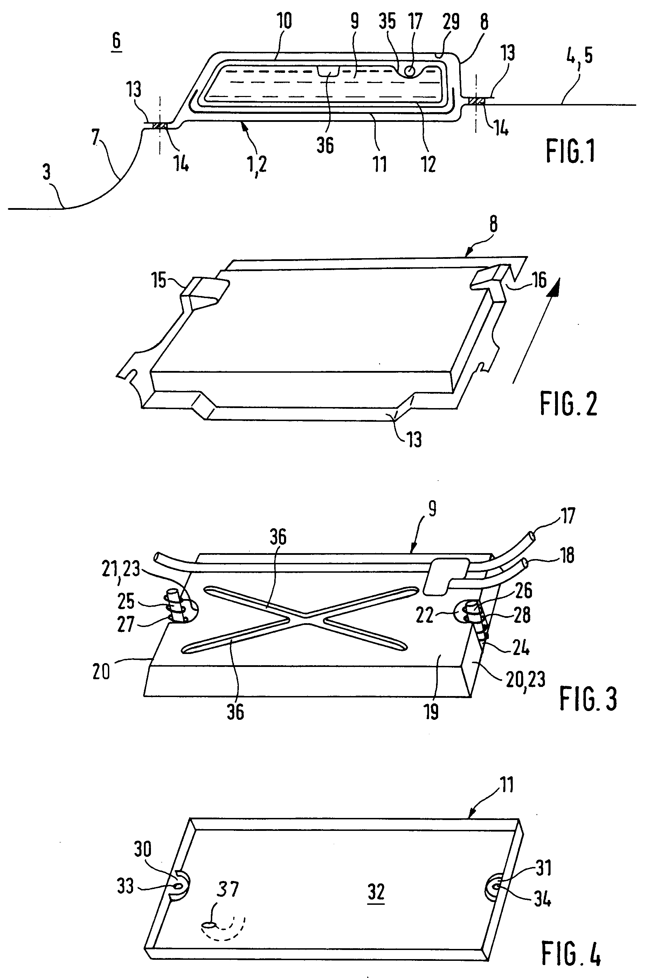

Die Fig. 1 zeigt einen Bereich eines Bodenbleches 2 eines Kraftfahrzeuges 1 zwischen einer Sitzwanne 3 für die Rücksitzbank auf der einen Seite und einem Abschnitt 4 eines Kofferraumes 5. Auf der zum Fahrzeuginnenraum 6 hinzeigenden Oberfläche 7 des Bodenbleches 2 ist unter einer Abdeckung 8 mit einem hutförmigen Querschnitt ein Kraftstoff-Zusatzbehälter 9 angeordnet. Der Kraftstoff-Zusatzbehälter 9 ist in einer Diffusions-Sperrfolie 10 gasdicht eingeschweißt. Unterhalb des Kraftstoff-Zusatzbehälters 9 ist eine Ablaufwanne 11 am Bodenblech 2 befestigt, wobei die Ablaufwanne 11 allseitig den Boden 12 des Kraftstoff-Zusatzbehälters 9 umgibt.

Aus den Fig. 1 und 2 geht die wannenähnliche Form der Abdeckung 8 hervor. Die Abdeckung 8 ist bruchfest und flammsicher ausgebildet. Die Abdeckung 8 weist einen umlaufenden Flansch 13 auf, dessen Form dem Verlauf des Bodenbleches 2 so angepaßt ist, daß durch die Anordnung mindestens einer in der Fig. 1 im Schnitt dargestellten Dichtung 14 eine flüssigkeitsdichte Befestigung der Abdeckung 8 an dem Bodenblech 2 erreicht wird. Zusätzlich sind an der Abdeckung 8 abgedichtete Austrittsöffnungen 15, 16 für die in der Fig. 3 gezeigten Leitungen 17 und 18 ausgebildet. Durch einen Pfeil ist in der Fig. 2 die Längsrichtung des Kraftfahrzeuges 1 angegeben.

Wie aus den Fig. 1 und 3 hervorgeht, sind die Leitungen 17, 18 an einer Oberseite 19 des Kraftstoff-Zusatzbehälters 9 in Vertiefungen 35 befestigt. An zwei gegenüberliegenden, kleineren Stirnflächen 20 des Kraftstoff-Zusatzbehälters 9 sind Einbuchtungen 21, 22 in den Seitenwänden 23 des Kraftstoff-Zusatzbehälters 9 ausgebildet, in denen im Bereich des Bodens 12 jeweils eine Durchgangsöffnung 24 für jeweils einen Haltebolzen 25, 26 vorgesehen ist. Die Haltebolzen 25, 26 sind im Bodenblech 2 befestigt. Auf die Haltebolzen 25, 26 ist jeweils eine Feder 27, 28 geschoben, die mit ihrem unteren Ende auf dem Flanschbereich der jeweiligen Einbuchtung 21, 22 des Kraftstoff-Zusatzbehälters 9 anliegt. Das jeweilige obere Ende der Federn 27, 28 liegt unter Vorspannung an der Innenfläche 29 der Abdeckung 8 an. Bei einer Verformung des Bodenbleches 2 kann somit der Kraftstoff-Zusatzbehälter 9 und die Ablaufwanne 11 in Längsrichtung der Haltebolzen 25, 26 nach oben hin ausweichen. An der Oberseite 19 des Kraftstoff-Zusatzbehälters 9 sind zur Erhöhung der Steifigkeit zwei diagonal verlaufende Mulden 36 vorgesehen.

In der Fig. 4 ist die Ablaufwanne 11 dargestellt. Entsprechend dem Kraftstoff-Zusatzbehälter 9 weist die Ablaufwanne 11 an der gleichen Stelle wie die Einbuchtungen 21, 22 Flansche 30, 31 auf, die jeweils mit einer Durchgangsöffnung 33, 34 zur Aufnahme der Haltebolzen 25, 26 versehen sind. Am Boden 32 der Ablaufwanne 11 ist ein Ablauf 37 ausgebildet, der mit dem Kraftstoff-Hauptbehälter verbunden ist.

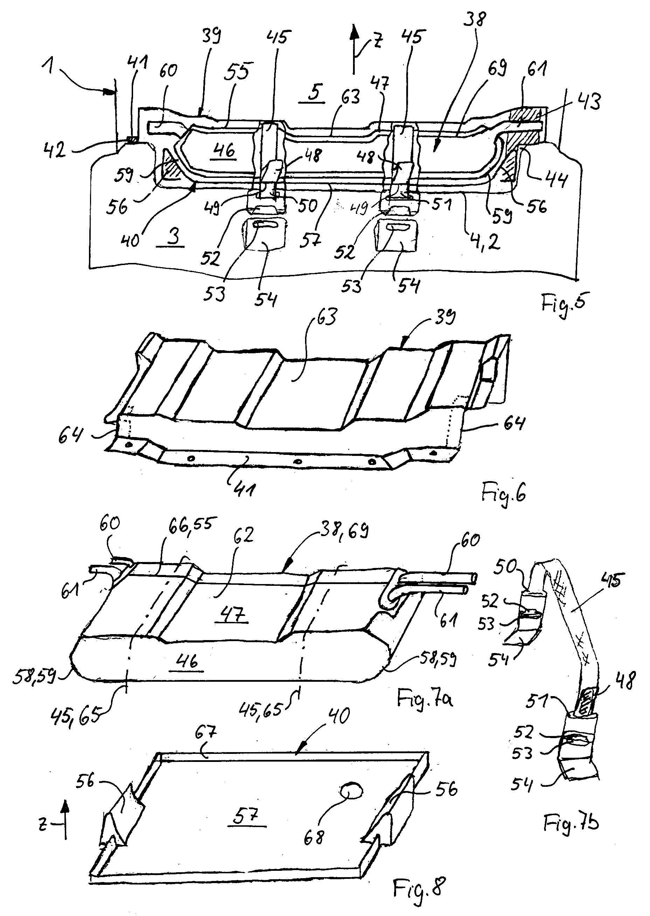

Die Fig. 5 zeigt die Anordnung einer zweiten Ausführungsform eines Kraftstoff-Zusatzbehälters 38 in der gleichen Lage wie der Kraftstoff-Zusatzbehälter 9 zwischen einer Sitzwanne 3 für die Rücksitzbank auf der einen Seite und dem sich daran anschließenden Abschnitt 4 eines Kofferraumes 5. Oberhalb des Kraftstoff-Zusatzbehälters 38 ist eine Abdeckung 39 angeordnet und unterhalb des Kraftstoff-Zusatzbehälters 38 befindet sich eine Ablaufwanne 40.

Die Abdeckung 39 ist mit einem als Abdichtfläche dienenden Flansch 41 versehen. Zwischen dem Flansch 41 und dem Bodenblech 2 ist eine Dichtung 42 angeordnet. Bei einem komplizierten Verlauf des Bodenbleches 2 ist statt einer herkömmlichen Dichtung 42 ein großvolumigeres, elastisch verformbares Abdichtungsteil 43 zwischen der Abdeckung 39 und dem Bodenblech 2 eingeklemmt. Das Abdichtungsteil 43 kann zur Vereinfachung der Montage lose in einen Zwischenraum 44 zwischen dem Zusatzbehälter 38 und dem Bodenblech 2 eingeklemmt oder eingelegt werden.

Im Unterschied zum Zusatzbehälter 9 ist der Zusatzbehälter 38 durch zwei Halteriemen 45 am Bodenblech 2 befestigt. Die Halteriemen 45 verlaufen in der in der Fig. 5 gezeigten Ausführungsform in etwa parallel zur Längsrichtung des Kraftfahrzeuges 1 und liegen an den gegenüberliegenden Seitenwände 46 sowie an der oberen Wand 47 des Zusatzbehälters 38 zumindest teilweise an. Die Halteriemen 45 weisen jeweils eine Schlaufe 48 auf, deren Länge durch eine Reißnaht 49 bestimmt ist. Die Festigkeit der Reißnaht 49 ist abhängig von der Kraft, bei der sich der Kraftstoffbehälter 38 bei einer Verformung des Bodenblechs 2, beispielsweise bei einem Crash, nach oben in Z-Richtung vom Bodenblech 2 abheben soll. Der Zusatzbehälter 38 soll dabei mindestens einen Verschiebeweg von 20 bis 60 mm zurücklegen. Zusätzlich oder alternativ dazu kann der Halteriemen 45 aufgrund der verwendeten Materialien, des Aufbaus und der Herstellungstechnik eine solche Elastizität aufweisen, daß durch den Halteriemen 45 ein Verschiebeweg gegeben ist.

Wie aus den Fig. 5 und 7b hervorgeht, befindet sich an den beiden Enden 50, 51 des Halteriemens 45 jeweils ein Haken 52 zum Einhängen in einer am Bodenblech 2 bzw. der Sitzwanne 3 ausgebildete Öse oder Öffnung 53. Die Öffnung 53 kann beispielsweise in einem entsprechend abgewinkelten Blech 54 ausgebildet sein, wobei das Blech 54 an dem Bodenblech 2 oder der Sitzwanne 3 befestigt sein kann.

Der Zusatzbehälter 38 ist gasdicht in einer Diffusion-Sperrfolie 55 eingeschweißt. Die Sperrfolie 55 kann in einer Ausführungsform als einer der Form des Zusatzbehälters 38 entsprechend angepaßte Tüte ausgebildet sein, so daß die Anzahl der Schweißnähte verringert ist.

Die in den Fig. 5 und 8 dargestellte Ablaufwanne 40 weist zwei gegenüberliegende Anlaufschrägen 56 auf, die sich keilförmig vom Boden 57 in Z-Richtung nach oben hin verjüngen. Entsprechend den Anlaufschrägen 56 sind an den Stirnwänden 58 des Gehäuses 69 des Zusatzbehälters 38 der Form der Anlaufschrägen 56 angepaßte Abrundungen oder Schrägen 59 ausgebildet. In den Zusatzbehälter 38 münden Leitungen 60, 61. Der Zusatzbehälter 38 und die Abdeckung 39 weisen in der gezeigten Ausführungsform eine Vertiefung 62, 63 zur Anpassung eines in der nicht dargestellten Lehne der Rücksitzbank ausgebildeten Skisackes auf.

In der Fig. 6 sind in punktierten Linien Abdichtflächen 64 dargestellt, die am Randbereich der Abdeckung 39 an der Innenfläche ausgebildet sind. In der Fig. 7a ist in strichpunktierten Linien 65 der jeweilige Verlauf der beiden Halteriemen 45 eingezeichnet. Durch eine durchgezogene Linie ist eine Schweißnaht 66 der Sperrfolie 55 dargestellt. In der Fig. 8 ist neben den umlaufenden Seitenwänden 67, in denen die Anlaufschrägen 56 integriert sind, und dem Boden 57 ein Ablauf 68 dargestellt, der mit dem nicht gezeigten Kraftstoff-Hauptbehälter verbunden ist.

Die Betankung des Zusatzbehälters 9 bzw. 38 erfolgt dadurch, daß der Kraftstoff-Hauptbehälter mit dem Zusatzbehälter 9, 38 durch Überlauf- und Entlüftungsleitungen gekoppelt ist. Somit ergibt sich die Befüllung des Zusatzbehälters 9, 38 analog der üblichen Betankung durch das mit dem Kraftstoff-Hauptbehälter verbundene Einfüllrohr.

## Patentansprüche

1. Kraftstoffversorgungsanlage für ein Kraftfahrzeug, mit einem Kraftstoffbehälter, der außerhalb eines Fahrzeuginnenraumes an einem Bodenblech des Kraftfahrzeuges angeordnet ist,
dadurch gekennzeichnet, daß ein Kraftstoff-Zusatzbehälter (9, 38) innerhalb des Fahrzeuginnenraumes (6) an dem Bodenblech (2) befestigt und mit dem Kraftstoffbehälter verbunden ist.

2. Kraftstoffversorgungsanlage nach Anspruch 1,
dadurch gekennzeichnet, daß der Kraftstoff-Zusatzbehälter (9, 38) und die an dem Kraftstoff-Zusatzbehälter (9, 38) angeordneten Leitungen (17, 18; 60, 61) und Anschlüsse unter einer flamm- und bruchfesten Abdeckung (8, 39) angeordnet sind.

3. Kraftstoffversorgungsanlage nach den Ansprüchen 1 oder 2,
dadurch gekennzeichnet, daß der Kraftstoff-Zusatzbehälter (9, 38) in einer den Kraftstoff-Zusatzbehälter (9, 38) umgebenden Ablaufwanne (11, 40) angeordnet ist.

4. Kraftstoffversorgungsanlage nach einem der vorhergehenden Ansprüche,
dadurch gekennzeichnet, daß der Kraftstoff-Zusatzbehälter (9, 38) und die daran angeordneten Leitungen (17, 18; 60, 61) und Anschlüsse in einer Diffusions-Sperrfolie (10, 55) gasdicht eingeschweißt sind.

5. Kraftstoffversorgungsanlage nach einem der vorhergehenden Ansprüche, dadurch gekennzeichnet, daß zwischen einem umlaufenden Flansch (13, 41) der Abdeckung (8, 39) und dem Bodenblech (2) mindestens eine umlaufende Dichtung (14, 42) angeordnet ist, durch die sich ein flüssigkeitsdichter Zwischenraum zwischen der Abdeckung (8, 39) und dem entsprechenden Abschnittes des Bodenbleches (2) ergibt, in dem der Kraftstoff-Zusatzbehälter (9, 38) angeordnet ist.

6. Kraftstoffversorgungsanlage nach einem der vorhergehenden Ansprüche, dadurch gekennzeichnet, daß die Abdeckung (8, 39), der Kraftstoff-Zusatzbehälter (9, 38) und ggf. die Ablaufwanne (11, 40) aus einem Material mit niedrigen Permeationswerten besteht.

7. Kraftstoffversorgungsanlage nach einem der vorhergehenden Ansprüche, dadurch gekennzeichnet, daß zumindest der Kraftstoff-Zusatzbehälter (9, 38) verschiebbar so am Bodenblech (2) gehaltert ist, daß der Kraftstoff-Zusatzbehälter (9, 38) bei einer Verformung des Bodenbleches (2) um einen vorbestimmten Verschiebeweg ausweichen kann.

8. Kraftstoffversorgungsanlage nach Anspruch 7,
dadurch gekennzeichnet, daß der Verschiebeweg zwischen 20 und 60 mm liegt.

9. Kraftstoffversorgungsanlage nach einem der vorhergehenden Ansprüche, dadurch gekennzeichnet, daß der Kraftstoff-Zusatzbehälter (9) verschiebbar in mindestens zwei Führungen (24; 25, 26) gehaltert ist.

10. Kraftstoffversorgunganlage nach Anspruch 9, dadurch gekennzeichnet, daß die Führungen zum einen aus mindestens zwei Haltebolzen (25, 26) bestehen, die mit ihrem einen Ende an der Karosserie (2) des Kraftfahrzeuges (1) befestigt sind und daß die Führungen zum anderen aus entsprechend geformten Öffnungen oder Ausnehmungen (24) bestehen, die am Kraftstoff-Zusatzbehälter (9) ausgebildet sind, und in denen die Haltebolzen (25, 26) geführt sind.

11. Kraftstoffversorgungsanlage nach einem der Ansprüche 1 bis 8, dadurch gekennzeichnet, daß der Kraftstoff-Zusatzbehälter (38) über mindestens zwei Halteriemen (45) an der Karosserie (2) gehaltert ist

12. Kraftstoffversorgungsanlage nach Anspruch 11, dadurch gekennzeichnet, daß die Halteriemen (45) voneinander beabstandet angeordnet sind und daß die Halteriemen (45) im wesentlichen in der Längsrichtung des Kraftfahrzeuges (1) verlaufen.

13. Kraftstoffversorgungsanlage nach den Ansprüchen 11 oder 12, dadurch gekennzeichnet, daß an den Enden (50, 51) des jeweiligen Halteriemens (45) eine Vorrichtung mit einem Haken oder einer Öse angeordnet ist, über die der jeweilige Halteriemen (45) über eine an der Karosserie (2, 3) entsprechend ausgebildete Öse oder einen daran angeordneten Haken befestigbar ist.

14. Kraftstoffversorgungsanlage nach einem der Ansprüche 11 bis 13, dadurch gekennzeichnet, daß der jeweilige Halteriemen (45) eine solche Elastizität aufweist, daß der Halteriemen (45) ab einer bestimmten, auf den Halteriemen (45) wirkenden Kraft um einen vorbestimmten Verschiebeweg nachgibt.

15. Kraftstoffversorgungsanlage nach einem der Ansprüche 11 bis 14, dadurch gekennzeichnet, daß der jeweilige Halteriemen (45) im montierten Zustand eine Vorspannkraft auf den Kraftstoff-Zusatzbehälter (38) ausübt.

16. Kraftstoffversorgunganlage nach einem der Ansprüche 11 bis 15, dadurch gekennzeichnet, daß der jeweilige Halteriemen (45) mit einer Schlaufe (48) versehen ist, die durch mindestens eine Reißnaht (49) am Halteriemen (45) so befestigt ist, daß die jeweilige Reißnaht (49) ab einer bestimmten, auf den Halteriemen (45) wirkenden Kraft aufgeht und daß die Länge des freigewordenen Abschnitts der Schlaufe (48) eine Verschiebung des Kraftstoff-Zusatzbehälters (38) ermöglicht.

17. Kraftstoffversorgungsanlage nach einem der Ansprüche 11 bis 16, dadurch gekennzeichnet, daß die Ablaufwanne (40) mit mindestens einer Anlaufschräge (56) versehen ist.

18. Kraftstoffversorgungsanlage nach einem der Ansprüche 11 bis 17, dadurch gekennzeichnet, daß das Gehäuse (69) des Kraftstoff-Zusatzbehälters (38) mindestens eine Schräge oder Abrundung (59) aufweist, die in der Nähe oder direkt an der entsprechenden Anlaufschräge (56) angeordnet ist.

19. Kraftstoffversorgungsanlage nach einem der Ansprüche 11 bis 18, dadurch gekennzeichnet, daß zwischen dem Kraftstoff-Zusatzbehälter (38) und der Karosserie (2, 3) ein Abdichtungselement (43) zum Ausgleich eines Spaltes zumindest an den Stellen angeordnet ist, an denen die Karosserieform einen unebenen und/oder komplizierten Verlauf aufweist, der mit einem Abdichtungsflansch (41, 64) schwierig zu überdecken ist.
